# EUROPEAN PATENT APPLICATION

(11) **EP 4 245 496 A1**
(43) Date of publication of application: **20.09.2023**
(21) Application number: 21892284.7
(22) Date of filing: 09.11.2021
(51) Int. Cl.: B29B 17/00, H01M 50/449, B29B 17/04, B09B 3/00, B29B 11/10, B29B 9/06, B29C 48/00, B29C 48/05

(54) **METHOD FOR PREPARING COMPOSITE RESIN COMPOSITION BY USING SECONDARY BATTERY WASTE SEPARATORS**

(30) Priority: 11.11.2020 KR 20200150476
(71) Applicant: Kang, Chang-gee, Suyeong-gu Busan 48309 (KR)
(72) Inventor: HA, Hyun-soo, Ulsan 44708 (KR); KANG, Chang-gee, Busan 48309 (KR)
(74) Representative: Marks & Clerk LLP
(86) International application number: PCT/KR2021/016226
(87) International publication number: WO 2022/103116

(57) **Abstract**

The present invention relates to a method for preparing a composite resin composition by regenerating secondary battery waste separators of which one surface or both surfaces are coated with ceramic particles or aramids, and, more specifically, to a method for preparing a composite resin composition through: i) a pretreatment step of crushing secondary battery waste separators coated with ceramic particles and compression-crushing same into a smaller volume; ii) a step of mixing the pretreated waste separator material with a polyolefin-based material having excellent fluidity, other modifiers and additives, and melting, uniformly kneading and extruding same; and iii) a step of processing same into a pellet form. The present invention relates to an economical, efficient and eco-friendly process capable of preparing a variously usable novel composite resin composition from separator scraps coated with ceramic particles or aramids, which are generated during the manufacture of secondary batteries, and separators, which are inferior goods requiring disposal.

## Description

### Technical Field

The present invention relates to a method for preparing a composite resin pellet or composition by regenerating a waste secondary battery separator coated with ceramic particles or aramid on one side or both sides, and a composite resin pellet or composition having a new component prepared by this method.

### Background Art

The lithium secondary battery is recognized as one of the most excellent secondary batteries commercially available so far. Due to this excellence, it is widely used as a power source for various electric products requiring miniaturization and light weight, such as mobile phones, PCs, and various power tools, and in recent years, applications for electric vehicles have been expanded. In order to use them for these applications, development of a lithium-ion secondary battery with higher capacity, longer life, and higher stability has been requested. Therefore, efforts are being made to improve the performance of lithium secondary batteries, and in particular, research on a separator that separates a positive electrode and a negative electrode to prevent a short circuit is being actively conducted.

Existing widely used polyolefin-based separators are weak in high-temperature thermal stability and physical strength, and when exposed to a temperature of 150 °C for about 1 hour, the thermal shrinkage rate is 50 to 90% so that there are problems in which the separator's function is lost, and there is a high possibility of an internal short circuit occurring in the event of an external impact. In order to solve this problem, a technique that has recently been universally adopted is ceramic or aramid coating.

For example, Korean Patent Registration Nos. 10-739337, 10-754746, and 10-858214 and Korean Patent Publication Nos. 10-2010-28009 and 10-2011-35847 propose an organic/inorganic composite ceramic coating separator in which a coating solution composed of inorganic particles and a polymer binder is applied to at least one surface of the polyolefin-based porous substrate to form a porous active layer. It is reported that the ceramic coated separator introduced in the above patents has significantly improved thermal stability compared to conventional separators without a ceramic coating layer. Further, Korean Patent Publication No. 10-2014-0048138 proposes to control moisture through the production of hydrophobic particles using an organic filler instead of an inorganic filler.

However, the occurrence rate of defective products is increasing during the complex coating process to improve the properties of secondary batteries, and the generation of unusable scraps is also increasing due to failure to achieve high required physical properties in final products.

Recently used high-performance separators mainly use ultra-high molecular weight polyethylene to extrude paraffinic oil as a processing aid, prepare a sheet containing oil, cool and solidify to phase separate, form voids through biaxial stretching, and prepare separator fabric through the step of removing oil using methylene chloride. Further, as a way to increase heat resistance and characteristics, materials such as ceramic or aramid are coated on one or both sides.

The coating separator manufacturing process is very complicated. Thus, many cases occur that edge parts with low quality uniformity become scraps, and the produced coating separators cannot be used because they do not satisfy the final specifications. However, since ultra-high molecular weight polyethylene with a very high viscosity contains a very high content of ceramic or aramid coated particles, it cannot be reproduced in a general way, so it has been considered as waste and disposed of through incineration or landfill. Therefore, expensive treatment costs are generated, and the environmental burden is also high.

Therefore, the present inventors provide a novel composite resin composition, which can be applied for various purposes using separator scraps coated with ceramic particles or aramids on one or both sides of the secondary battery produced during the manufacturing process and a waste separator coated on one side or both sides, which is a defective product, as well as developing a method to solve processability problems through an economical, efficient and environmentally friendly process, thereby completing the present invention.

### Disclosure

### Technical Problem

An object of the present invention is to regenerate a currently used separator coated with ceramic or aramid.

Specifically, an object of the present invention is to provide a method for preparing a composite resin composition by regenerating a waste secondary battery separator coated with ceramic particles or aramid, in which the method comprises a pretreatment step of crushing and compression-crushing the secondary battery waste separator coated with ceramic particle or aramid on one side or both sides; a step of mixing the same with a polyolefin-based resin, a modifier and an additive and melting, kneading and extruding the mixture; and a step of processing the extrude into a pellet form.

Another object of the present invention is to provide a composite resin composition comprising a secondary battery waste separator coated with ceramic particles or aramid on one side or both sides, a polyolefin resin, and optionally any one or more of a modifier or additive.

### Technical Solution

In order to achieve the objects, the present invention provides a method for preparing a composite resin composition by regenerating a secondary battery waste separator coated with ceramic particles or aramids, in which
the method comprises
i) a pretreatment step of crushing the secondary battery waste separator coated with ceramic particles or aramids and compression-crushing the same into a smaller volume;
ii) a step of mixing the pretreated waste separator material with a polyolefin-based resin, a modifier and an additive and melting, kneading and extruding the mixture; and
iii) a step of processing the extrude into a pellet form.

Further, the present invention provides the method in which
the pretreatment step i) is carried out in either
i-a)a method of pressing a piece of the waste separator membrane through an open mill roll, or
i-b) a method of putting the piece of waste separator into an extruder to prepare the same in the form of lumps.

Further, the present invention provides the method in which
in the melting, kneading and extruding step ii),
the polyolefin-based resin includes any one selected from the group consisting of polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof and has a melt index of 0.01 to 300 g/10 minutes (190 °C to 230 °C, 2.16 kg).

Further, the present invention provides the method in which
the melting, kneading and extruding step ii) is carried out by a method selected from the group consisting of
ii-a) putting the crushed waste separator material, the polyolefin-based resin, the modifier and the additive into a pressurized kneader, melting under pressure, kneading uniformly, and then extruding the same; or
ii-b) putting and kneading the crushed waste separator material, the polyolefin-based resin, the modifier and the additive into Banbury mixer and putting the same into an extruder to melt-extrude the same.

Further, the present invention provides the method in which
the pellet processing step iii) is produced in various forms, that is, the form of pellets by cooling and solidifying the extrudate in the form of strand or by using a rotary cutter on the extruded surface.

Further, the present invention provides
a novel recycled composite resin pellet in the form of a pellet containing a secondary battery waste separator coated on one or both surfaces with ceramic particles or aramid prepared by the preparing method according to the present invention.

Further, the present invention provides
a composite resin pellet comprising 1 to 90% by weight of a polyolefin resin and 10 to 99% by weight of a waste separator material pretreated by crushing and compression-crushing a waste separator for secondary battery coated with ceramic particles or aramid on one or both sides thereof into a small volume.

Further, the present invention provides
a composite resin pellet comprising 10 to 99% by weight of a waste separator material pretreated by crushing and compression-crushing a waste separator for secondary battery coated with ceramic particles or aramid on one or both sides thereof into a small volume and
1 to 90% by weight of a polyolefin resin,
in which
the pretreated waste separator material is prepared by
   i-a) a method of pressing a piece of the waste separator membrane through an open mill roll, or
   i-b) a method of putting the piece of waste separator into an extruder to prepare the same in the form of lumps,
the polyolefin-based resin includes any one selected from the group consisting of
polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof and has a melt index level of 0.01 to 300 g/10 minutes (190 °C to 230 °C, 2.16 kg),
and the composite resin pellet is prepared by a method selected from the group consisting of
   ii-a) putting the crushed waste separator material, the polyolefin-based resin, the modifier and the additive into a pressurized kneader, melting under pressure, kneading uniformly, and then extruding the same; or
   ii-b) putting and kneading the crushed waste separator material, the polyolefin-based resin, the modifier and the additive into Banbury mixer and putting the same into an extruder to melt-extrude the same.

Further, the present invention provides
a composite resin composition comprising the composite resin pellets according to the present invention.

Further, the present invention provides
a pipe, gear or artificial turf containing the composite resin pellet or composition according to the present invention.

Further, the present invention provides
automotive interior/exterior materials, household goods, industrial materials or building materials containing the composite resin pellet or composition according to the present invention.

### Advantageous Effects

The present invention is a method for preparing a novel composite resin pellet or composition from a secondary battery waste separator coated with ceramic particles or aramid on one side or both sides and provides an economical, efficient, and environmentally friendly method of preparing a new composite resin pellet or composition by using coating separator scrap and defective coated waste separators generated during the secondary battery manufacturing process and adding appropriate polyolefin-based resins, modifiers, and additives in an optimal composition.

The novel composite resin pellet or composition according to the present invention can be applied as an excellent new material having excellent economic feasibility and physical properties that can replace existing composite materials in various fields such as automobile interior/exterior materials, household goods, industrial use, and construction using various existing processing methods.

In particular, the novel composite resin pellet or composition according to the present invention may reduce cost by utilizing a waste separator, eliminate the irritating odor of formaldehyde, have excellent tensile strength and excellent impact strength, and has relatively low heat resistance so that it can replace polyacetal for applications that do not require high heat resistance.

### Description of Drawings

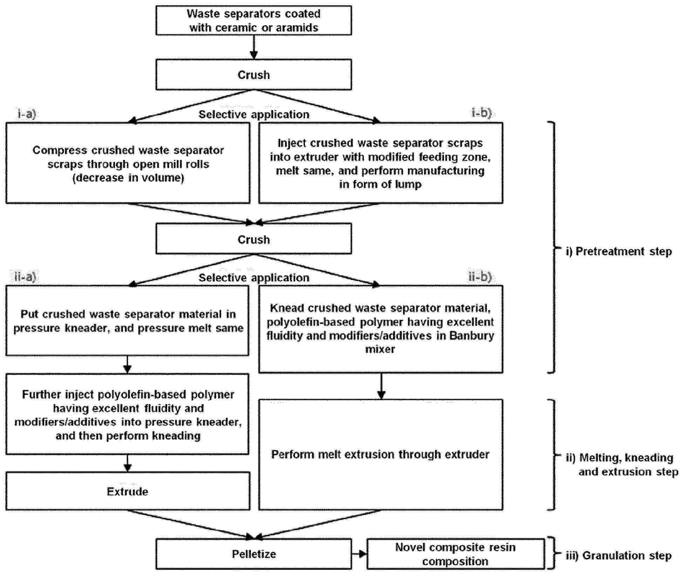

FIG. 1 is a view showing a method of preparing a composite resin composition by regenerating a secondary battery waste coating separator according to one embodiment of the present invention.

### Mode for Invention

Hereinafter, the present invention is described in detail.

At this time, unless there is another definition in the technical terms and scientific terms used, they have meanings commonly understood by those of ordinary skill in the art to which this invention belongs.

The present invention provides
the method of preparing a composite resin pellet by regenerating a secondary battery waste separator coated with ceramic particles or aramid, in which the method comprises:
i) a pretreatment step of crushing the secondary battery waste separator coated with ceramic particles or aramids and compression-crushing the same into a smaller volume;
ii) a step of mixing the pretreated waste separator material with a polyolefin-based resin, a modifier and an additive and melting, kneading and extruding the mixture; and
iii) a step of processing the extrude into a pellet form.

Since the coating separator exists in the form of a continuous film or in the form of thin and large irregular pieces, it is very difficult to input the process for regeneration. In the preparing method, step i) is a step for imparting properties that facilitate kneading or post-processing with heterogeneous raw materials through pulverization after preparing in a lump form by appropriately crushing/pressing or putting into an extruder.

The waste separator in step i) is a scrap or defective product generated during the process of ceramic coating or aramid coating on one side or both sides using a separator fabric using ultrahigh molecular weight polyethylene (UHMWPE), or preferably a scrap or defective product generated during the process of manufacturing a secondary battery.

The pretreatment step i) is preferably carried out in either
i-a) a method of pressing a piece of the waste separator membrane through an open mill roll, or
i-b) a method of putting the piece of waste separator into an extruder to prepare the same in the form of lumps,

At this time, it is preferable that the extruder in i-b) is an extruder with a modified feeding zone.

It is impossible to secure processability with a mixture of ultra-high molecular weight polyethylene and high-content ceramic or aramid materials alone. Thus, in the above manufacturing method, the step ii) is a step for imparting desired properties along with easy processing through uniform kneading and extrusion by mixing and melting a polyolefin material with an optimized molecular weight and an appropriate content with other modifiers and additives in order to impart processability so that the extrusion pelletization process and post-processing, which are the subsequent steps, are possible.

Due to the high viscosity of ultra-high molecular weight polyethylene, which is the main component of the fabric used in the coated separator, it cannot be melt-extruded alone, and ceramic or aramid used as a coating material is present in a very high content of 20 to 200 parts by weight compared to 100 parts by weight of ultra-high molecular weight polyethylene used in the fabric, which greatly inhibits flowability in a molten state, making regeneration impossible. Therefore, during the regeneration process, when the polyolefin-based resin in the form of low-viscosity pellets or powder is uniformly mixed, the melt viscosity is lowered, thereby facilitating processing. However, since the viscosity of the ultra-high molecular weight polyethylene used in the separator fabric is very high, when general extrusion processing is performed after mixing low-viscosity polyolefin-based resins, due to the too large difference in viscosity, it is difficult to mix them uniformly with each other, making general extrusion processing impossible. Therefore, it is necessary to apply the following two methods of melting, kneading, and extruding steps that can improve processability by uniformly mixing ultra-high molecular weight polyethylene, polyolefin-based resin, and high-content ceramic or aramid composites having greatly different viscosities.

The melting, kneading and extruding of step ii) is preferably carried out by a method selected from the group consisting of
ii-a) putting the crushed waste separator material, the polyolefin-based resin, the modifier and the additive into a pressurized kneader, melting under pressure, kneading uniformly, and then extruding the same; or
ii-b) putting and kneading the crushed waste separator material, the polyolefin-based resin, the modifier and the additive into Banbury mixer and putting the same into an extruder to melt-extrude the same.

In the melting, kneading and extruding of step ii),
the method using high temperature pressurized kneading in ii-a) may be performed by a method in which a low molecular weight polyolefin resin at MI 0.01 to 100 g/10 minutes (190 °C, 2.16 kg) and additives/modifiers are added to the pretreated coating separator scrap, they are evenly melted and kneaded a high temperature of 50 °C to 300 °C, preferably 100 °C to 250 °C, more preferably 150 °C to 200 °C and a pressure of 0.1 to 0.8 MPa, preferably 0.3 to 0.7 MPa, more preferably 0.4 to 0.6 MPa for 5 to 30 minutes, and then the melted and kneaded mixture lump is extruded in various shapes, for example, in the form of strands, through a circular die using a single or twin screw extruder at a temperature of 150 °C to 250 °C.

The method using a Banbury mixer in ii-b) is to mix the pulverized waste separator material, a polyolefin polymer with excellent flowability, and modifiers/additives are uniformly kneaded at a temperature of 150 °C to 200 °C using a kneading device of a Banbury mixer in a dry state to prepare a lump-type mixture, and it is put into the extruder using a conical type extruder. The put extrudate may be extruded in various shapes, for example, in the form of strands, through a die having a circular hole.

The polyolefin-based resin is preferably any one selected from the group consisting of polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof.

The polyethylene (PE) is selected from the group consisting of high-density polyethylene (HDPE), low-density polyethylene (LDPE), linear low-density polyethylene (LLDPE), and copolymer derived from at least one of ethylene and C3 to C10 alpha-olefins as an ethylene-based copolymer, and combinations thereof, and it is preferable that the melt index is 0.01 to 300 g/10 minutes (190 °C, 2.16 kg), preferably 0.1 to 200 g/min, more preferably 1 to 100 g/minutes.

The polypropylene (PP) is selected from the group consisting of homo PP, random PP, block PP, isotactic polypropylene (iPP), syndiotactic polypropylene (sPP), high melt strength polypropylene (HMS-PP), and copolymer derived from at least one of propylene and C2 or C4 to C10 alpha-olefins as a propylene-based copolymer, and combinations thereof, and it is preferable that the melt index is 0.01 to 300 g/10 minutes (230° C, 2.16 kg), preferably 0.1 to 200 g/minutes, more preferably 1 to 100 g/minutes.

In step ii), 0 to 50% by weight of a modifier and/or 0 to 30% by weight of an additive may be added in addition to the composition for a specific purpose.

The modifier may include polyethylene wax (PE wax), atactic polypropylene (APP), an acrylic copolymer, a maleic anhydride copolymer, ethylene propylene rubber (EPR), TAFMER^{™}, or an ethylene octane/butene copolymer.

The additive may include a phenolic antioxidant, a phosphorus antioxidant, a stearate, a hydrotalcite, a pigment, a colorant, a filler (whiskers, wood flour, lignin, starch, natural and synthetic silica, magnesium trihydroxide, aluminum trihydroxide, calcium carbonate, kaolin, magnesium carbonate), titanium dioxide, an antistatic agent, a flame retardant, a slip agent, an antiblock additive, an antimicrobial agent, a nucleating agent, and the like.

At this time, in order to remove the odor (binder component present in the coating separator) that may occur in the composite resin, it is also possible to separately add 0.01 to 10 parts by weight of a product containing a volatile organic compound (VOC) removing material to the zeolite support.

In the preparing method, the pellet processing step iii) is a step of cooling and solidifying the extrudate extruded in the form of a strand in air or using cooling water, and then preparing the extrudate in the form of pellets using a rotary cutter.

The preparing method according to the present invention consists of 1) a step of appropriately crushing/pressing or putting into an extruder to prepare in a lump form, then imparting properties that facilitate kneading with heterogeneous raw materials or post-processing through crushing since the ceramic coating or aramid coating separator exists in the form of a continuous film or in the form of thin and large irregular pieces to difficultly perform the input process for regeneration; and 2) a step of imparting desired properties along with easy processing by mixing and melting low-viscosity polyolefin-based materials, other modifiers and additives to increase the melt index, in order to impart processability to enable the extrusion pelletization process and post-processing, which are the subsequent steps since it is impossible to secure processability with a ceramic coating or aramid coating separator alone.

The preparing method according to the present invention includes ① pretreatment to improve usability and processability of a ceramic coating or aramid coating separator, and ② mixing materials, modifiers, and additives having different viscosities and increasing the melt index using a pressurized kneader or Banbury mixer.

The preparing method according to the present invention has an effect of manufacturing a new composite resin composition from a ceramic coating or aramid coating waste separator, which has been entirely discarded in the past, through the above-described configuration.

Currently, a ceramic coating or aramid coating separator, unlike a non-coating separator, is completely incinerated or landfilled as waste because regeneration itself is completely impossible due to low processability such as shape and thickness of ceramic coating or aramid coating. Conventionally, heat treatment and methylene chloride treatment techniques have been reported to remove oil contained in waste separators, but the problem of low processability due to ceramic coating or aramid coating cannot be solved only by such oil removal processes.

In order to solve the problem of processability, which is significantly lowered to a level where extrusion and injection are impossible, the present invention solved the problem by a method in which first, pretreatment is performed, materials having different viscosities, modifiers and additives are mixed, and the melt index is increased using a pressurized kneader or Banbury mixer, and then the melt index is increased to prepare a state suitable for melting and extrusion. In fact, it was confirmed through examples that the present invention can prepare a composite resin having excellent strength and heat resistance from a ceramic-coated or aramid-coated waste separator.

Further, the present invention provides
a composite resin pellet comprising 1 to 90% by weight of a polyolefin resin and 10 to 99% by weight of a waste separator material pretreated by crushing and compression-crushing a waste separator for secondary battery coated with ceramic particles or aramid on one or both sides thereof into a small volume.

The composite resin pellet is made of a mixture of two or more kinds of mixtures, and preferably has a melt index of 0.05 to 100 g/10 min (190° C, 2.16 kg).

The waste separator preferably is a scrap or defective product generated during the process of coating one side or both sides with ceramic or aramid using a separator fabric with ultrahigh molecular weight polyethylene (UHMWPE), or the process of preparing a secondary battery, and the scrap or defective product preferably has a melt index of 0.001 to 10 g/10 minutes (190 °C, 2.16 kg).

The polyolefin-based resin is preferably any one selected from the group consisting of polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof.

The polyethylene (PE) is selected from the group consisting of high-density polyethylene (HDPE), low-density polyethylene (LDPE), linear low-density polyethylene (LLDPE), and copolymer derived from at least one of ethylene and C3 to C10 alpha-olefins as an ethylene-based copolymer, and combinations thereof, and it is preferable that the melt index is 0.01 to 300 g/10 minutes (190 °C, 2.16 kg), preferably 0.1 to 200 g/min, more preferably 1 to 100 g/minutes.

The polypropylene (PP) is selected from the group consisting of homo PP, random PP, block PP, isotactic polypropylene (iPP), syndiotactic polypropylene (sPP), high melt strength polypropylene (HMS-PP), and copolymer derived from at least one of propylene and C2 or C4 to C10 alpha-olefins as a propylene-based copolymer, and combinations thereof, and it is preferable that the melt index is 0.01 to 300 g/10 minutes (230 °C, 2.16 kg), preferably 0.1 to 200 g/minutes, more preferably 1 to 100 g/minutes.

The composite resin pellet may include 0 to 50% by weight of a modifier and/or 0 to 30% by weight of an additive in addition to the composition.

The modifier may include polyethylene wax (PE wax), atactic polypropylene (APP), an acrylic copolymer, a maleic anhydride copolymer, ethylene propylene rubber (EPR), TAFMER^{™}, or an ethylene octane/butene copolymer.

The additive may include a phenolic antioxidant, a phosphorus antioxidant, a stearate, a hydrotalcite, a pigment, a colorant, a filler (whiskers, wood flour, lignin, starch, natural and synthetic silica, magnesium trihydroxide, aluminum trihydroxide, calcium carbonate, kaolin, magnesium carbonate), titanium dioxide, an antistatic agent, a flame retardant, a slip agent, an antiblock additive, an antimicrobial agent, a nucleating agent, and the like.

At this time, in order to remove the odor (binder component present in the coating separator) that may occur in the composite resin pellet, it is also possible to separately add 0.01 to 10 parts by weight of a product containing a volatile organic compound (VOC) removing material to the zeolite support.

The composite resin pellets are preferably prepared by the preparing method according to the present invention.

Specifically, the composite resin pellet comprises
a composite resin pellet comprising 10 to 99% by weight of a waste separator material pretreated by crushing and compression-crushing a waste separator for secondary battery coated with ceramic particles or aramid on one or both sides thereof into a small volume and
1 to 90% by weight of a polyolefin resin,
in which
the pretreated waste separator material is prepared by
   i-a) a method of pressing a piece of the waste separator membrane through an open mill roll, or
   i-b) a method of putting the piece of waste separator into an extruder to prepare the same in the form of lumps,
the polyolefin-based resin includes any one selected from the group consisting of
polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof and has a melt index level of 0.01 to 300 g/10 minutes (190 °C to 230 °C, 2.16 kg),
and the composite resin pellet is preferably prepared by a method selected from the group consisting of
   ii-a) putting the crushed waste separator material, the polyolefin-based resin, the modifier and the additive into a pressurized kneader, melting under pressure, kneading uniformly, and then extruding the same; or
   ii-b) putting and kneading the crushed waste separator material, the polyolefin-based resin, the modifier and the additive into Banbury mixer and putting the same into an extruder to melt-extrude the same.

Further, the present invention provides a composite resin composition comprising the composite resin pellet according to the present invention.

Further, the present invention provides a pipe, gear or artificial turf containing the composite resin pellet or composition according to the present invention.

Further, the present invention provides automobile interior/exterior materials, household goods, industrial materials or construction materials containing the composite resin pellet or composition according to the present invention.

The composite resin pellet or composition according to the present invention is very competitive in terms of cost and has good processability and physical properties. Therefore, it can be optimally applied to pipes, gears, and artificial turf, but the use of the present invention is not limited to those described above, and it may be applied to various uses in various fields such as automobile interior/exterior materials, household goods, industrial materials, and construction materials.

It can be confirmed that the composite resin pellet or composition according to the present invention is somewhat inferior in terms of heat resistance due to a relatively low melting temperature compared to the physical properties of polyacetal resin, but has good mechanical strength, excellent impact strength, low friction coefficient, and low molding shrinkage rate and absorption rate, and excellent chemical properties so that it can be applied as an alternative when heat resistance is not greatly required among various applications such as automobile parts, gears, and bearings to which polyacetal is applied.

Hereinafter, examples are described in detail to aid understanding of the present invention. However, the following examples are merely illustrative of the contents of the present invention, but the scope of the present invention is not limited to the following examples. The examples of the present invention are provided to more completely explain the present invention to those skilled in the art.

### [Example 1]

As a pre-treatment process for the post-process, small pieces of pulverized separator scrap were compressed through open-type mill rolls to reduce the volume, and then put the compressed pieces into a crusher and pulverized into smaller pieces.

Small pieces of raw material pulverized by the crusher were put into a pressurized kneader and subjected to compression kneading under pressure of 0.55 MPa at a temperature of 180 ° C for 5 minutes to prepare a molten dough.

60 parts by weight of high-density polyethylene resin I (Korea Petrochemical F600) pellets with MI of 0.035 and density of 0.957 and 30 parts by weight of high-density polyethylene resin II (Korea Petrochemical E308) with MI of 0.85 and density of 0.956 with respect to 30 parts by weight of coating separator scrap were additionally put into a pressurized kneader and then a compression kneading operation was further performed for 20 minutes at a temperature of 200 °C under a pressure of 0.55 MPa to prepare a lump of the mixture.

The lump of the mixture was extruded at a cylinder temperature of 200 °C using an LID 40, 40Ø co-direction twin screw extruder to form strands, and the strands were cooled and solidified in a water bath containing cooling water and then prepared into pellets with a length of 5 mm using a rotary cutter.

Samples were prepared from the pelletized resin composition by an injection molding machine with a clamping force of 150 tons.

### [Example 2]

The post-process was performed in the same manner as in <Example 1> except that as a pre-treatment process for the post-process, small pieces of pulverized separator scrap was put into an extruder with a modified feeding zone, melted at 200 °C, prepared in the form of a lump, cooled, put into a crusher, and crushed the lump into small pieces.

### [Example 3]

In the pretreatment process for the post process, they were pulverized into small pieces in the same manner as in <Example 1> above.

60 parts by weight of high-density polyethylene resin I (Korea Petrochemical F600) pellets with MI of 0.035 and density of 0.957 and 10 parts by weight of high-density polyethylene resin II (Korea Petrochemical E308) with MI of 0.85 and density of 0.956 with respect to 30 parts by weight of the crushed coating separator scrap were additionally put into a Banbury mixer and then they were uniformly stirred at high temperature at 40 rpm for 10 minutes.

It was performed in the same manner as in <Example 1> except that the mixture was put into the hopper of the LID 40, 40Ø co-direction twin screw extruder, extruded at a cylinder temperature of 200 °C to form strands, and the strands were cooled and solidified in a water bath containing cooling water, and then prepared into pellets with a length of 5 mm using a rotary cutter.

### [Example 4]

In the pretreatment process for the post-process, they were pulverized into small pieces in the same manner as in <Example 2>, and the post process was performed in the same manner as in <Example 3>.

### [Example 5]

The process was performed in the same manner as in <Example 1> except that 30 parts by weight of high-density polyethylene resin III (Korea Petrochemical M690) pellets with MI of 0.85 and density of 0.956 with respect to 70 parts by weight of the molten dough shaped coating separator scrap which is input in a pressurized kneader was additionally put into the pressurized kneader followed by uniformly mixing.

### [Example 6]

The process was performed in the same manner as in <Example 1> except that 30 parts by weight of the composite resin composition pellet and 70 parts by weight of high-density polyethylene 1 prepared in <Example 2> were uniformly mixed through dry blending, and then samples were prepared by an injection molding machine with a clamping force of 150 tons.

### [Example 7]

The process was performed in the same manner as in <Example 1> except that 70 parts by weight of linear low-density polyethylene resin (Lotte Chemical UJ900) pellets with MI of 22 (190 °C) and density of 0.914 with respect to 30 parts by weight of the molten dough shaped coating separator scrap which is input in a pressurized kneader was additionally put into the pressurized kneader followed by uniformly mixing.

### [Example 8]

The process was performed in the same manner as in <Example 1> except that 70 parts by weight of low-density polyethylene resin (Lotte Chemical XJ700) pellets with MI of 22 (190 °C) and density of 0.914 with respect to 30 parts by weight of the molten dough shaped coating separator scrap which is input in a pressurized kneader was additionally put into the pressurized kneader followed by uniformly mixing.

### [Example 9]

The process was performed in the same manner as in <Example 1> except that 70 parts by weight of polypropylene resin homo PP (Korea Petrochemical HJ4045) pellets with MI of 45 (230 °C) and density of 0.91 with respect to 20 parts by weight of the molten dough shaped coating separator scrap which is input in a pressurized kneader was additionally put into the pressurized kneader followed by uniformly mixing.

### [Example 10]

The process was performed in the same manner as in <Example 1> except that 70 parts by weight of polypropylene resin random PP (Korea Petrochemical RJ6428) pellets with MI of 28 (230 °C) and density of 0.91 with respect to 20 parts by weight of the molten dough shaped coating separator scrap which is input in a pressurized kneader was additionally put into the pressurized kneader followed by uniformly mixing.

### [Example 11]

The process was performed in the same manner as in <Example 1> except that 70 parts by weight of polypropylene resin (Korea Petrochemical SB9230) pellets with MI of 30 (230 °C) and density of 0.907 with respect to 20 parts by weight of the molten dough shaped coating separator scrap which is input in a pressurized kneader was additionally put into the pressurized kneader followed by uniformly mixing.

### [Comparative Example 1]

The process was performed in the same manner as in <Example 1>, except that only 100 parts by weight of the pulverized coating separator scrap was pressurized and kneaded.

### [Comparative Example 2]

The process was performed in the same manner as in <Example 1>, except that the temperature during the pressurized kneading process was carried out at room temperature.

### [Comparative Example 3]

The process was performed in the same manner as in <Example 3>, except that small pieces of the separator scraps were used without a pretreatment process for the post-process.

### [Comparative Example 4]

The process was performed in the same manner as in <Example 1>, except that 100 parts by weight of high-density polyethylene resin I (Korea Petrochemical F600) pellets were directly used to prepare the sample by an injection molding machine with a clamping force of 150 tons.

### [Comparative Example 5]

The process was performed in the same manner as in <Example 1>, except that 100 parts by weight of polyethylene resin (Korea Petrochemical SB9230) pellets were directly used to prepare the sample by an injection molding machine with a clamping force of 150 tons.

### [Comparative Example 6]

The process was performed in the same manner as in <Example 1>, except that 100 parts by weight of polyacetal resin (Korea Engineering Plastics KEPITAL F20-30) pellets were directly used to prepare the sample by an injection molding machine with a clamping force of 150 tons.

### [Experimental Example 1]

For the samples prepared in <Examples 1 to 11> and <Comparative Examples 1 to 6>, the surface state of the injection molding material was compared in order to compare the dispersibility of the ceramic particles on the samples, and the physical properties were measured after 48 hours aging under constant temperature of 23 °C and constant humidity of 50%.

The physical property measurement method was based on the test method specified in the ASTM standard. Specifically, the melt index (MI) was measured at 190 °C under a load of 2.16 kg according to ASTM D1238, density was measured according to the ASTMD1505 method, flexural modulus was measured according to the ASTM D790 method, tensile strength and elongation were measured according to the ASTM D638 method, and hardness was measured according to the ASTM D785 method.

**[Table 1]**

| Samples | High Density Polyethylen e I (HDPE) | High Density Polyethylen e II (HDPE) | High Density Polyethylen e III (HDPE) | Linear Low Density Polyethyle ne (LLDPE) | Low Density Polyethyle ne (LDPE) | Polypropyle ne (Homo PP) | Polypropyle ne (Random PP) | Polypropyle ne (Block PP) | Polyacet al (POM) |
|---|---|---|---|---|---|---|---|---|---|
| Melt Index (2.16kg) (g/10min) | 0.035 (190°C) | 0.85 (190°C) | 12 (190°C) | 22 (190°C) | 22 (190°C) | 45 (230°C) | 28 (230°C) | 30 (230°C) | 9 (190°C) |
| Density (g/cm³) | 0.957 | 0.956 | 0.962 | 0.914 | 0.914 | 0.91 | 0.91 | 0.91 | 1.41 |
| Flexural Modulus (kgf/cm²) | 10,000 | 9,000 | 12,000 | 2,350 | 950 | 21,000 | 12,000 | 15,000 | 25,500 |
| Impact Strength (kgf.cm/c m, 23°C) | 5 | >50 | >50 | NB | NB | 3 | 6 | 10 | 6.5 |
| Tensile Strength (kgf/cm2) | 280 | 250 | 400 | 75 | 90 | 400 | 330 | 290 | 650 |
| Heat Deflection Temperatu re (°C) | 74 | 69 | 62 | - | - | 140 | - | 131 | 100 |
| Product Name | Korea petrochemi | Korea petrochemi | Korea petrochemi | Lotte chemical UJ900 | Lotte chemical XJ700 | Korea petrochemic al | Korea petrochemic | Korea petrochemic | KEP K20-03 |
| | cal F600 | cal E308 | cal M690 | | | HJ4045 | al RJ6428 | al SB9230 | |

**[Table 2]**

| | | | Exa mpl e 1 | Exa mpl e 2 | Exa mpl e 3 | Exa mpl e 4 | Exa mpl e 5 | Ex a m pl e 6 | Ex a m pl e 7 | Ex a m pl e 8 | Ex am ple 9 | Ex am ple 10 | Ex am ple 11 | Co mpa rati ve Exa mpl e 1 | Co mpa rati ve Exa mpl e 2 | Co mpa rati ve Exa mpl e 3 | Co mpa rati ve Exa mpl e4 | Co mpa rati ve Exa mpl e 5 | Co mpa rati ve Exa mpl e 6 |
|---|---|---|---|---|---|---|---|---|---|---|---|---|---|---|---|---|---|---|---|
| Coating Separator Scrap | | | 30 | 30 | 30 | 30 | 70 | (2 1) | 30 | 30 | 20 | 20 | 20 | 100 | 30 | 30 | - | - | - |
| High Density Polyethylene I | | | 60 | 60 | 60 | 60 | - | 70 | - | - | - | - | - | - | 60 | 60 | 100 | - | - |
| High Density Polyethylene II | | | 10 | 10 | 10 | 10 | - | - | - | - | - | - | - | - | 10 | 10 | - | - | - |
| High Density Polyethylene III | | | - | - | - | - | 30 | (9) | - | - | - | - | - | - | - | - | - | - | - |
| Linear Low Density Polyethylene | | | - | - | - | - | - | - | 70 | - | - | - | - | - | - | - | - | - | - |
| Low Density Polyethylene | | | - | - | - | - | - | - | - | 70 | - | - | - | - | - | - | - | - | - |
| Polypropylene (Homo PP) | | | - | - | - | - | - | - | - | - | 80 | - | - | - | - | - | - | - | - |
| Polypropylene (Random PP) | | | - | - | - | - | - | - | - | - | - | 80 | - | - | - | - | - | - | - |
| Polypropylene (Block) | | | - | - | - | - | - | - | - | - | - | - | 80 | - | - | - | - | 100 | - |
| Polyacetal (POM) | | | - | - | - | - | - | - | - | - | - | - | - | 80 | - | - | - | - | 100 |
| Pret reat me nt | i) Crushing process | | i-a) | i-b) | i-a) | i-b) | i-a) | | | | | | | | | X | - | | |
| Pell etiz atio n | ii) Extruding process | | ii-a) | | ii-b) | | ii-a) | | | | | | | | | ii-b) | | | |
| | Ope rati on Te mp erat ure | °C | 180 | | 200 | | 180 | | | | | | | | Roo m Te mpe ratu re | 200 | | | |
| | Wo rka bilit y | - | ○ | ○ | ○ | ○ | ○ | ○ | ○ | ○ | ○ | ○ | ○ | △ | X | X | | | |
| | mel t ind ex (2.1 6kg ) | g/ 10 mi n | 0.4 3(1 90 °C) | 0.4 3(1 90 °C) | 0.4 3(1 90 °C) | 0.4 3(1 90 °C) | 0.6 1(1 90 °C) | - | 1. 3 | 1. 1 | 9.2 (23 0 °C) | 7.1 (23 0 °C) | 77 (23 0 °C) | Not Me asur able | X | X | 0.03 4(1 90 °C) | 30( 230 °C) | 9(1 90 °C) |
| | Mel ting Te mp erat ure | °C | 132 | 132 | 132 | 132 | 133 | 13 3 | 12 0 | 10 5 | 16 6 | 14 8 | 16 6 | 132 | X | X | 133 | 166 | 165 |
| Inje ctio n Pro pert ies | Den sity | g/ c m ³ | 1.0 6 | 1.0 6 | 1.0 6 | 1.0 6 | 1.3 2 | - | 1. 21 | 1. 18 | 0.9 23 | 0.9 23 | 0.9 23 | 1.7 74 | X | X | 0.95 7 | 0.9 07 | 1.4 1 |
| | Har dne ss | R so al e | 67 | 67 | 67 | 67 | 64 | 77 | 44 | 43 | 99 | 80 | 93 | Inje ctio n Not Pos sibl e | X | X | 67 | 103 | 118 |
| | Fle xur al Mo dul us | K gf/ c m² | 9,2 00 | 9,2 00 | 9,2 00 | 9,2 00 | 13, 800 | 15 ,1 00 | 3, 10 0 | 1, 00 0 | 17, 10 0 | 9,3 00 | 13, 20 0 | | X | X | 11,1 00 | 14, 000 | 25, 500 |
| | Ten site Stre ngt h | K gf/ c m² | 245 | 245 | 245 | 245 | 240 | 28 5 | 80 | 60 | 33 0 | 26 0 | 25 0 | | X | X | 375 | 295 | 650 |
| | Elo nga tion | % | 700 | 700 | 700 | 700 | 50 | 14 0 | 70 | 10 0 | 73 | 88 | 75 | | X | X | 20 | 740 | 32 |
| | Dis pers ion in Sa mpl e | - | Go od | Go od | Go od | Go od | Go od | G oo d | G oo d | G oo d | Mo der ate | Mo der ate | Mo der ate | X | X | X | - | - | - |

**[Table 3]**

| Classification | | | | Example 5 | Comparative Example 6 |
|---|---|---|---|---|---|
| Composition | | | | Coating separator scrap (70%) + High Density Polyethylene III (30%) | Polyacetal (100%) |
| Mechanical Property | Melt Index (2.16kg, 190°C) | | g/10min | 0.61 | 9 |
| | Melting Temperature | | °C | 133 | 165 |
| | Heat Deflection Temperature | | °C | 84 | 100 |
| | Density | | g/cm³ | 1.32 | 1.41 |
| | Hardness | | R scale | 64 | 118 |
| | Flexural Modulus | | Kgf/cm² | 13,800 | 25,500 |
| | Tensile Strength | | Kgf/cm² | 240 | 650 |
| | Elongation | | % | 50 | 32 |
| | Impact Strength | 23°C | KJ/m² | 88.7 | 6.5 |
| | (Charpy Notched) | -30°C | | 34.1 | 5.5 |
| | Friction Coefficient | | - | 0.12 | 0.18 |
| | Shrinkage Rate (2.0 Mm) | | % | 1.5% | 2.0% |
| | Wear Resistance (Sand Slurry) | | Criterion: Example 5 = 100 | 100 | 300 |
| | Absorption Rate | | % | <0.01 | 0.8 |
| Chemical Property | Weak Acid Resistance | - | ⊚ | ○ | |
| | Strong Acid Resistance | | ○ | X | |
| | Weak Alkali Resistance | | ⊚ | ○ | |
| | Strong Alkali Resistance | | ⊚ | ○ | |
| | Organic Solvent Resistance | | ○ | ○ | |
| | Odor Of Formaldehyde | - | None | Occurred | |

Chemical resistance decreases in the order of ⊚>○>△>X.

For wear resistance, weight loss is measured using sand slurry method, and based on Example 5 as 100 (relative value), the lower the value, the better the wear resistance.

It was confirmed that as shown in the physical property results in Table 3, the composite resin of the composition of <Example 6> prepared using coating separator scrap is somewhat inferior in terms of heat resistance due to a relatively low melting temperature compared to the physical properties of polyacetal resin, but has good mechanical strength, excellent impact strength, low coefficient of friction, low molding shrinkage rate and absorption rate, and excellent chemical properties.

### Industrial Applicability

Polyacetal resin, which is widely applied as an engineering plastic, has excellent tensile strength, impact strength, and abrasion resistance, low friction resistance, and excellent heat resistance, and thus is applied to various applications such as automobile parts, gears, and bearings. However, there are limitations in its application due to the high raw material price and the problem of developing a pungent odor of formaldehyde. The novel composite resin composition presented in the present invention lowers the cost by utilizing a waste separator, eliminates the pungent odor of formaldehyde and has excellent tensile strength and excellent impact strength, thereby providing sufficient possibility to replace polyacetal, which is used for applications that do not require much heat resistance due to relatively low heat resistance.

## Claims

1. A method for preparing a composite resin composition by regenerating a secondary battery waste separator coated with ceramic particles or aramids, the method comprising:
i) a pretreatment step of crushing the secondary battery waste separator coated with ceramic particles or aramids and the same into a smaller volume;
ii) a step of mixing the pretreated waste separator material with a polyolefin-based resin, a modifier and an additive and melting, kneading and extruding the mixture; and
iii) a step of processing the extrude into a pellet form,
wherein the pretreatment step i) is carried out in either i-a) pressing a piece of the waste separator membrane through an open mill roll, or i-b) manufacturing a piece of the waste separator membrane in the form of lumps by introducing the piece of the waste separator membrane into an extruder,
wherein the polyolefin-based resin of step ii) includes any one selected from the group consisting of polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof and has a melt index of 0.01 to 300 g/10 minutes (190 °C to 230 °C, 2.16 kg), and
wherein the melting, kneading, and extruding step ii) is carried out by a method selected from the group consisting of ii-a) putting the crushed waste separator material, the polyolefin-based resin, the modifier and the additive into a pressurized kneader, melting under pressure, kneading uniformly, and then extruding the same; or ii-b) putting and kneading the crushed waste separator material, the polyolefin-based resin, the modifier and the additive into Banbury mixer and putting the same into an extruder to melt-extrude the same.

2. The method of claim 1, wherein the waste separator of step i) is a scrap or defective product generated during the process of coating one side or both sides with ceramic or aramid using a separator fabric with ultrahigh molecular weight polyethylene (UHMWPE), or the process of preparing a secondary battery.

3. The method of claim 1, wherein the pellet processing step iii) is produced in the form of pellets by cooling and solidifying the extrudate in the form of strand or by using a rotary cutter on the extruded surface.

4. A composite resin pellet comprising 1 to 90% by weight of a polyolefin resin and 10 to 99% by weight of a waste separator material pretreated by crushing and compression-crushing a waste separator for secondary battery coated with ceramic particles or aramid on one or both sides thereof into a small volume,
wherein the pretreated waste separator material is prepared by carrying out in either
i-a) a method of pressing a piece of the waste separator through an open mill roll; or
i-b) a method of putting the piece of waste separator into an extruder to prepare the same in the form of lumps,
wherein the polyolefin-based resin includes any one selected from the group consisting of polyethylene (PE), polypropylene (PP), polymethylpentene (PMP), polybutene-1 (PB-1), polyolefin elastomer (POE), polyisobutylene (PIB), ethylene propylene rubber (EPR), ethylene propylene diene rubber (EPDM), and combinations thereof and has a melt index of 0.01 to 300 g/10 minutes (190 °C to 230 °C, 2.16 kg), and
wherein the composite resin pellet is prepared by a method selected from the group consisting of ii-a) putting the crushed waste separator material, the polyolefin-based resin, the modifier and the additive into a pressurized kneader, melting under pressure, kneading uniformly, and then extruding the same; or
ii-b) putting and kneading the crushed waste separator material, the polyolefin-based resin, the modifier and the additive into Banbury mixer and putting the same into an extruder to melt-extrude the same.

5. The method of claim 4, wherein the waste separator is a scrap or defective product generated during the process of coating one side or both sides with ceramic or aramid using a separator fabric with ultrahigh molecular weight polyethylene (UHMWPE), or the process of preparing a secondary battery.

6. The method of claim 4, wherein the composite resin pellet has the melt index of 0.05 to 100 g/10 minutes (190 °C, 2.16 kg) level.

7. A composite resin composition comprising the composite resin pellet according to any one of claims 4 to 6.
